(19) Europäisches Patentamt
European Patent Office
Office européen des brevets

(11) Veröffentlichungsnummer: **0 006 563**
**B1**

# (12) EUROPÄISCHE PATENTSCHRIFT

(45) Veröffentlichungstag der Patentschrift: **11.02.81**

(51) Int. Cl.³: **C 09 D 3/36**, C 25 D 13/06

(21) Anmeldenummer: **79101996.1**

(22) Anmeldetag: **18.06.79**

## (54) Wasserverdünnbare berzugsmittel und ihre Verwendung.

(30) Priorität: **30.06.78 DE 2828727**

(43) Veröffentlichungstag der Anmeldung: **09.01.80 (Patentblatt 80/01)**

(45) Bekanntmachung des Hinweises auf die Patenterteilung: **11.02.81 Patentblatt 81/06**

(84) Benannte Vertragsstaaten: **BE DE FR GB**

(56) Entgegenhaltungen: **Keine**

(73) Patentinhaber: **BASF Aktiengesellschaft**
**Carl-Bosch-Strasse 38**
**D-6700 Ludwigshafen (DE)**

(72) Erfinder: **Schupp, Eberhard, Dr.-Chem.**
**Tilsiter Weg 4**
**D-6830 Schwetzingen (DE)**

**EP 0 006 563 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Wasserverdünnbare Überzugsmittel und ihre Verwendung

Die vorliegende Erfindung betrifft wasserverdünnbare Überzugsmittel auf der Grundlage von Umsetzungsprodukten von Maleinsäureanhydrid mit Dienpolymerisaten, die einen Zusatz von Alkenylphenolcarbonsäuren enthalten und die Verwendung dieser Überzugsmittel für die Elektrotauchlackierung.

Es ist bekannt, Polymerisate von Dienen mit Maleinsäureanhydrid umzusetzen und die dabei erhaltenen Produkte nach Öffnen der Anhydridgruppe (durch Hydrolyse bzw. Alkoholyse) durch Neutralisation mit Basen in eine wasserlösliche Form zu bringen. Wäßrige Lacke, die aus solchen Bindemitteln hergestellt werden, besitzen jedoch wegen ihrer hohen Sauerstoffreaktivität mangelhafte Stabilität im Elektrophoresebad.

Nach der DE-A 1720592 wird der hohe Gehalt an Doppelbindungen, der die Ursache für die Sauerstoffempfindlichkeit ist, durch partielle Hydrierung vermindert. Dies erfordert allerdings einen erheblichen technischen Aufwand.

Aus der DE-B-1929593 geht hervor, daß Carboxylgruppentragende Butadienöle durch den Zusatz von wärmereaktiven Kondensationsprodukten von Formaldehyd mit Phenolcarbonsäuren stabilisiert werden können. Derartigen Mischungen haftet allerdings der Nachteil an, daß die verwendeten wärmereaktiven Phenolcarbonsäureharze beim Härten der Lackfilme vorwiegend mit sich selbst vernetzen und nur zu einem sehr geringen Teil mit den Carboxylgruppen des maleinisierten Butadienöls verestern, was zu einem heterogenen Aufbau des Lackfilms und damit auch zu einem nur mäßigen Korrosionsschutz führt.

In den DE-B-1965669 und 2120962 werden flankierende Maßnahmen beschrieben, mit dem Ziel, die zur Stabilisierung notwendige Menge an wärmereaktiven Phenolcarbonsäuren zu vermindern. Dadurch werden die oben erwähnten Nachteile allerdings nur vermindert, nicht aber behoben.

Aufgabe der vorliegenden Erfindung ist es, Überzugsmittel aufzuzeigen, mit denen diese Nachteile vermieden werden und Lackfilme mit überlegenem Korrosionsschutz erzeugt werden können. Überraschenderweise gelingt die Lösung dieser Aufgabe dadurch, daß den maleinisierten Dienpolymerisaten carboxylgruppentragende Alkenylphenole zugesetzt werden.

Gegenstand der vorliegenden Erfindung sind durch Zusatz von Basen wasserverdünnbare Überzugsmittel, die als Bindemittel Umsetzungsprodukte von Dienpolymerisaten mit Maleinsäureanhydrid, sowie gegebenenfalls weitere übliche Zusätze und Hilfsmittel enthalten, die dadurch gekennzeichnet sind, daß sie zusätzlich 0,5 bis 30 Gewichtsprozent, bezogen auf das Bindemittel, einer mindestens einfach olefinisch ungesättigten Alkenylphenolcarbonsäure enthalten.

Letztere werden vorzugsweise durch Umsetzung eines mindestens einfach olefinisch ungesättigten Alkenylphenols, wie Cashew-Nußschalenöl, mit Maleinsäureanhydrid oder einer ungesättigten Fettsäure erhalten.

Gegenstand der vorliegenden Erfindung ist außerdem die Verwendung der erfindungsgemäßen Überzugsmittel für die Elektrotauchlackierung.

Obwohl die olefinisch ungesättigten Alkenylphenolcarbonsäuren als hochwirksame Inhibitoren das Elektrophoresebad vor Autoxidation schützen, behindern sie die Härtung des abgeschiedenen Lackfilms beim Einbrennen überraschenderweise nicht, sondern bewirken im Gegenteil eine Erhöhung der Filmhärte, werden also in den Lackfilm eingebaut. Da sie im Gegensatz zu den Resolcarbonsäuren der DE-B-1929593, DE-B-1965669 und DE-B 2120962 keine wärmereaktiven Methylolgruppen enthalten, kann dies nur über eine Beteiligung der Doppelbindungen der Alkenylseitenketten an der autoxidativen Vernetzungsreaktion des maleinisierten Dienpolymerisats geschehen. Der fertige Lackfilm besitzt also einen vollkommen homogenen Aufbau mit unverseifbaren, säure- und alkalifesten Polymerketten und Vernetzungsstellen, was dazu führt, daß die erfindungsgemäßen Bindemittel sich durch ausgezeichnete Korrosionsschutzwirkung auf phosphatierten und auf unbehandelten Stahlblechen auszeichnen.

In den erfindungsgemäßen Überzugsmitteln sind die mindestens einfach olefinisch ungesättigten Alkenylphenolcarbonsäuren in Mengen von 0,5 bis 30, vorzugsweise 3 bis 15 Gewichtsprozent, bezogen auf das Bindemittel, enthalten.

Um zu den erfindungsgemäß zu verwendenden carboxylgruppentragenden Alkenylphenolen zu gelangen, geht man im allgemeinen von äthylenisch ungesättigten Phenolen aus. Diese können auf verschiedene Weise gewonnen werden. Besonders leicht und preiswert zugänglich sind sie in Form von Cashew-Nußschalenöl. Dabei handelt es sich um ein natürlich vorkommendes Produkt, welches aus der schwammigen Zwischenschicht zwischen Kern und Nußschale von Anacardium occidentale gewonnen wird.

Die in kalt extrahiertem Cashew-Nußschalenöl zu etwa 90 % enthaltene Anacardsäure (X = H, Y = COOH) :

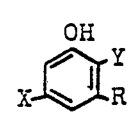

geht bei der industriellen Aufarbeitung unter Decarboxylierung in Cardanol (X, Y = H) über. Handelsübliches Cashew-Nußschalenöl besteht daher überwiegend aus Cardanol mit untergeordneten Mengen an Cardol (X = OH, Y = H) und polymerisiertem Material.

Bei R handelt es sich um eine Alkenylseitenkette mit vorwiegend zwischen 13 und 17 Kohlenstoffatomen und 1-3 überwiegend 2, äthylenisch ungesättigten Doppelbindungen.

Für den erfindungsgemäßen Zweck kann dieses handelsübliche Cashew-Nußschalenöl direkt eingesetzt werden ; es kann sich jedoch als zweckmäßig erweisen, das durch Destillation im Vakuum aus Cashew-Nußschalenöl in bis zu 90 prozentiger Ausbeute gewinnbare reine Cardanol zu verwenden. Dabei handelt es sich um ein Gemisch langkettiger 3-Alkenylphenole, z.B. 3-(8, 11-Pentadecadienyl)-phenol.

Die Einführung der Carboxylgruppe (n) kann auf verschiedene Weise erfolgen. So kann z.B. eine Mischung von olefinisch ungesättigtem Alkenylphenol und ungesättigten Fettsäuren, wie z.B. Leinölfettsäure, Tallölfettsäure, Sojaölfettsäure, einer thermischen Oligomerisierung unterworfen werden. Man geht dabei zweckmäßigerweise von einer ungefähr äquimolaren Mischung von Alkenylphenol und ungesattigter Fettsäure aus und erhitzt so lange auf 200-350 °C, bevorzugt auf 250-300 °C, bis eine entnommene Probe nach Neutralisation klar wasserlöslich geworden ist.

Eine weitere Möglichkeit, Carboxylgruppen einzuführen, ist die Umsetzung der olefinisch ungesättigten Alkenylphenole mit Aldehyden und Aminosäuren in Form einer « Mannich-Reaktion ». Setzt man Alkenylphenol z.B. mit Formaldehyd und Sarkosin (N-Methylaminoessigsäure) bei 20-100 °C in alkoholischer Lösung um, so wird in ortho- und/oder para-Stellung zur phenolischen Hydroxylgruppe eine bis maximal drei Gruppen der Formel $-CH_2-N(CH_3)-CH_2COOH$ eingeführt.

Eine weitere — bevorzugte — Methode zur Einführung der Carboxylgruppen ist die Umsetzung der mindestens einfach olefinisch ungesättigten Alkenylphenole mit Maleinsäureanhydrid. Dazu werden die Alkenylphenole mit Maleinsäureanhydrid bei 150-250 °C umgesetzt. Es ist anzunehmen, daß dabei im wesentlichen eine sogenannte « En »-Reaktion abläuft, d.h. das Maleinsäureanhydrid lagert sich unter Absättigung seiner Doppelbindung an ein allylständiges Kohlenstoffatom der Seitenkette des Alkenylphenols an, wobei die äthylenisch ungesättigte Doppelbindung des Alkenylphenols unter Verschiebung erhalten bleibt. Das für diese Reaktion geeignete und leicht zugängliche Cardanol wird mit Maleinsäureanhydrid im molaren Verhältnis 1/0,5 bis 1/3 umgesetz. Ist ein höheres Molekulargewicht des Umsetzungsproduktes erwünscht, so kann z.B. das Cardanol vor der Umsetzung mit Maleinsäureanhydrid thermisch durch Erhitzen auf 230-330° oder radikalisch durch Zugabe von Peroxiden vorpolymerisiert werden, oder das Umsetzungsprodukt mit Maleinsäureanhydrid kann nachträglich thermisch oder radikalisch bis zur gewünschten Viskosität polymerisiert werden.

Um zu — nach Neutralisation mit Basen — wasserverdünnbaren bzw. wasserlöslichen Produkten zu kommen, werden die Anhydridringe mit Wasser oder niederen Alkoholen zur freien Säure oder zu Halbestern geöffnet. Um die erwünschte Wirkung, nämlich die Stabilisierung des Elektrophoresebads, zu erreichen, müssen die zur Verwendung kommenden Alkenylphenole Carboxylgruppen tragen. Eine mögliche Erklärung für ihre Wirksamkeit wäre eine Funktion als oxidierbares Schutzkolloid. Kondensationsprodukte aus Formaldehyd und Akenylphenolen, wie sie von der DE-A-2525799 u.a. zur Herabsetzung der Einbrenntemperatur von filmbildenden Kunstharzen auf Basis maleinisierten Polybutadiens vorgeschlagen wurden, zeigen diese Stabilisierung nicht.

Die erfindungsgemäß zu verwendenden Bindemittel sind im wesentlichen Umsetzungsprodukte von Dienpolymerisaten mit Maleinsäureanhydrid.

Als Dienpolymerisate können Homo- und Copolymere von konjugierten Dienen, wie Butadien-1,3, Isopren, Chloropren und/oder 2,3-Dimethylbutadien-1,3, sowie Copolymere dieser Diene mit anderen mischpolymerisierbaren Verbindungen, wie Styrol, α-Methylstyrol, (Meth-)-acrylsäureestern, Vinylestern usw. eingesetzt werden. Die zur Verwendung kommenden Dienpolymerisate besitzen im allgemeinen Molekulargewichte von ca. 1 000 bis 10 000 und enthalten isolierte Doppelbindungen. Je nach Herstellungsbedingungen können sich die Dienpolymerisate in ihrer Mikrostruktur, d.h. im Verhältnis zwischen cis-1,4, trans-1,4 und vinyl-1,2-Struktureinheiten unterscheiden. Handelsüblich sind sowohl Produkte mit überwiegender 1,4- als auch solche mit überwiegender vinyl-1,2-Struktur. Zur Herstellung der erfindungsgemäß zu verwendenden Bindemittel sind sämtliche dieser Produkte geeignet, sofern ihr Molekulargewicht zwischen ca. 1 000 und 10 000 liegt.

Die Dienpolymerisate können auch im Gemisch mit anderen zur Addition von α,β-ungesättigten Dicarbonsäuren befähigten Komponenten, wie z.B. den handelsüblichen Kohlenwasserstoffharzen auf Basis Cyclopentadien, Methylcyclopentadien und Isopren (z.B. Escopol der Fa. Esso), natürlich vorkommenden Harzen, wie Kolophonium und besonders natürlichen ungesättigten Ölen, wie Leinöl, Holzöl, Sojaöl usw., eingesetzt werden. Dabei können diese Komponenten gemeinsam mit den Dienpolymerisaten oder getrennt davon mit Maleinsäureanhydrid umgesetzt werden. In vielen Fällen erweist es sich als vorteilhaft, wenn eine oder mehrere der Komponenten vor der Umsetzung mit Maleinsäureanhydrid durch thermische oder radikalische Polymerisation mit den Dienpolymerisaten verbunden werden. Die an sich bevorzugte thermische Polymerisation läßt sich leicht bewerkstelligen, indem man eine oder mehrere der beschriebenen oder diesen ähnlichen Komponenten zusammen mit den Dienpolymeren unter Inertgasatmosphäre auf 200-300°, vorzugsweise auf 220-270° erhitzt und die Polymerisation durch Abkühlen abbricht, sobald die gewünschte Viskosität erreicht ist.

Die Umsetzung der Dienpolymerisate mit Maleinsäureanhydrid erfolgt im allgemeinen bei 170-240°, vorzugsweise bei 170-200 °C. Letzteres wird dazu in Mengen von 10 bis 25, vorzugsweise 15 bis 20 Gewichtsprozent, bezogen auf das Dienpolymerisat, eingesetzt. Oft erweist es sich als

zweckmäßig in Gegenwart geringer Mengen von Polymerisationsinhibitoren wie Kupfer oder Hydrochinon oder von Antioxidantien wie sterisch gehinderten Phenolen oder aromatischen Aminen zu arbeiten. Die Beendigung der Adduktbildung ist daran erkennbar, daß sich in dem Reaktionsprodukt keine mit Wasser extrahierbare Säure mehr nachweisen läßt. Das Anhydrid wird anschließend mit Wasser zur freien Säure oder mit Alkoholen zum Halbester umgesetzt. Als Alkohole können dabei aliphatische Alkohole mit 1 bis 10, vorzugsweise 1 bis 4 Kohlenstoffatomen verwendet werden. Außerdem sind Ätheralkohole, wie z.B. Glykolmonoäthyl- oder Glykolmonobutyläther geeignet. Auch untergeordnete Mengen von Polyalkoholen wie Glykol, 1,2-Propandiol, 1,3-Propaniol, 1,4-Butandiol etc. können mitverwendet werden. Die Öffnung des Anhydridrings wird bei Temperaturen von 60 bis 150° durchgeführt.

Zur Modifikation der erfindungsgemäßen Überzugsmittel können außer maleinisierten Dienpolymerisaten und olefinisch ungesättigten Alkenylphenolcarbonsäuren auch andere übliche Zusätze und Hilfsmittel mitverwendet werden, beispielsweise Bindemittel wie Aminoplastharze, wie Harnstoff-, Melamin- oder Phenol-Formaldehydharze oder Polyhydroxyverbindungen wie z.B. Styrol/Allyl-alkohol-Copolymere. Des weiteren können wasserverdünnbare Lösungsmittel mitverwendet werden, z.B. Alkohole wie Methanol, Äthanol, Propanol, Isopropanol, Isobutanol, Ätheralkohole wie Äthylenglykolmonomethyläther, Äthylenglykolmonoäthyläther, Äthylenglykolmono-(iso)-propyläther, Äthylenglykolmonobutyläther, außerdem Ketoalkohole wie Diacetonalkohol, sowie Gemische dieser wasserverdünnbaren Lösungsmittel mit in Wasser unlöslichen Lösungsmitteln wie Toluol, Isodecanol etc.

Zur Pigmentierung der Bindemittel können alle üblichen Pigmente, Füllstoffe und Lackhilfsmittel verwendet werden.

Zur Neutralisation der erfindungsgemäßen Überzugsmittel geeignete Basen sind neben Alkalihydroxiden vor allem Ammoniak und aliphatische Amine, z.B. Isopropylamin, Butylamin, Diäthylamin, Diisopropylamin, Dibutylamin, Morpholin, Piperidin, außerdem Alkanolamine wie z.B. Diäthanolamin oder Dimethyläthanolamin, sowie Gemische dieser Amine geeignet.

Um die erfindungsgemäßen Überzugsmittel in den wasserverdünnbaren Zustand zu überführen, werden die Basen im allgemeinen in solchen Mengen zugefügt, daß die Carboxylgruppen des Bindemittels zu 30-100 % neutralisiert werden und der mit Wasser verdünnte Lack einen pH von 6 bis 8,5 aufweist.

Die erfindungsgemäß hergestellten Bindemittel eignen sich besonders für das elektrophoretische Lackierverfahren. Dazu werden die zumindest teilweise neutralisierten erfindungsgemäßen Überzugsmittel, gegebenenfalls zusammen mit Zusätzen wie weiteren Bindemitteln, Pigmenten, Füllstoffen, Lösungsmitteln, Verlaufsverbesserern und Dispergierhilfsmitteln mit deionisiertem Wasser auf einen Feststoffgehalt von 5-20 Gewichtsprozent eingestellt. Die Abscheidung erfolgt auf den als Anode geschalteten elektrisch leitenden Gegenstand innerhalb von etwa 1-3 Minuten bei einer Spannung von ca. 50 bis 500 V. Nach dem Abspülen wird der abgeschiedene Film bei 150 bis 200, vorzugsweise bei 160-180 °C 10 bis 30 Minuten eingebrannt.

Es lassen sich jedoch auch wasserlösliche Lacke herstellen, welche auf konventionellem Wege, z.B. durch Spritzen, Tauchen oder Fluten aufgetragen werden.

Die folgenden Beispiele erläutern die Erfindung, ohne sie zu beschränken.

Die in den Beispielen genannten Teile und Prozente sind, soweit nicht anders angegeben, Gewichtsteile und Gewichtsprozente.

Herstellung des Harzes A:

800 Teile Polybutadienöl mit einem mittleren Molekulargewicht von 1 400 und einer Mikrostruktur von etwa 80 % cis-1,4- und 20 % trans-1,4-Einheiten werden mit 200 Teilen Maleinsäureanhydrid und 0,1 Teilen Hydrochinon 6 Stunden lang auf 190 °C erhitzt. Dann werden bei 80 °C innerhalb von 1 Stunde die Anhydridringe mit 56 Teilen Methanol in Gegenwart von 2 Teilen Triäthylamin geöffnet. Anschließend werden 20 Teile Butandiol-1,4 zugegeben und bei 110 °C Methanol abdestilliert, bis die Viskosität, gemessen bei 150 °C, 500 mPa.s beträgt. Danach wird mit 140 Teilen Diacetonalkohol und 120 Teilen Isopropanol auf einen Feststoffgehalt von 80 % verdünnt.

Herstellung des Harzes B:

320 Teile Polybutadienöl mit einem mittleren Molekulargewicht von 1 500 und einer Mikrostruktur von 20-30 % Vinyl-40-50 % trans 1,4- und 20-30 % cis 1,4-Einheiten und 80 Teile Sojaöl werden unter Stickstoffspülung so lange auf 250° erhitzt, bis die Viskosität, gemessen bei 50°, 650 mPa.s beträgt (Platten-Konus-Viskosimeter der Firma Epprecht, Bassersdorf, Schweiz). Anschließend werden 100 Teile Maleinsäureanhydrid und 0,05 Teile Hydrochinon zugegeben und 6 Stunden lang auf 190 °C erhitzt. Nach Abkühlen auf 120 °C werden 70 Teile Diacetonalkohol zugegeben. Danach werden bei 80 °C innerhalb von 1 Stunde die Anhydridringe mit 32 Teilen Methanol in Gegenwart von 1 Teil Triäthyamin als Katalysator geöffnet. Das Harz wird anschließend mit 60 Teilen Isopropanol auf einen Feststoffgehalt von 80 % verdünnt.

Herstellung der olefinisch ungesättigten Alkenylphenolcarbonsäure:

Stabilisator A:

250 Teile destillierten Cashewnußschalenöls mit einem Phenol-äquivalentgewicht von 298 und einer Jodzahl von 395 (nach Kaufmann) werden mit 100 Teilen Maleinsäureanhydrid 5 Stunden lang bei 190 °C und 2 Stunden bei 220 °C gehalten. Nach Abkühlen auf 100 °C wird mit 90 Teilen Diacetonalkohol verdünnt und nach Zugabe von 20 Teilen Wasser bei 95 bis 100 °C 2 Stunden lang gerührt. Das Produkt hat einen Feststoffgehalt von 80 %.

Stabilisator B :
150 Teile des oben verwendeten destillierten Cashewnußschalenöls werden mit 150 Teilen Leinölfettsäure so lange auf 250 °C erhitzt, bis die Viskosität, gemessen bei 50 °C von 30 auf 250 mPa.s angestiegen ist.

Beispiel 1

Aus 125 Teilen Harz A, 7 Teilen Stabilisator A, 20 Teilen Anatas, 10 Teilen Talkum, 3 Teilen Strontiumchromat und 1 Teil Ruß wird auf dem Dreiwalzenstuhl eine Paste angerieben. Daraus wird nach Neutralisation mit Triäthylamin und Verdünnen mit vollentsalztem Wasser ein Elektrotauchbad mit 12 % Feststoffgehalt und einem pH von 7,1 hergestellt. Tiefgezogene, nicht phosphatierte Stahlbleche werden, als Anode geschaltet, bei 150 V/25 °C beschichtet und 25 Minuten bei 170 °C eingebrannt. Die Schichtstärke beträgt 0,024 mm. Die Korrosionsprüfung nach dem ASTM-Salzsprühtest (DIN SS 50021) ergibt nach 240 Stunden eine Unterwanderung von 1 mm. Nach 4-wöchiger Alterung des Elektrotauchbads bei 35 °C werden nochmals Stahlbleche beschichtet. Die erhaltenen Überzüge sind glatt und zeigen im wesentlichen die gleiche Korrosionsschutzwirkung wie die aus frischen Bädern abgeschiedenen Überzüge.

Beispiel 2

Aus 125 Teilen Harz B und 10 Teilen Stabilisator B wird mit den im Beispiel 1 angegebenen Pigmentmengen eine Paste angerieben und, wie im Beispiel 1 angegeben, ein Elektrotauchbad angesetzt. Unbehandelte Stahlbleche werden bei 140 V/25 °C beschichtet und 25 Minuten bei 170 °C eingebrannt. Die Schichtdicke beträgt 0,025 mm. Die Korrosionsprüfung ergibt nach 240 Stunden eine Unterwanderung von 1-2 mm. Nach 4 Wochen Badalterung weisen die abgeschiedenen Lackfilme im wesentlichen noch die gleichen Eigenschaften auf.

Beispiel 3

Aus 125 Teilen Harz B und 7 Teilen Stabilisator A wird wie unter Beispiel 1 beschrieben ein Elektrotauchbad hergestellt. Die Beschichtung der Bleche erfolgte bei 150 V/25 °C ; eingebrannt wird 25 Minuten bei 170 °C. Der 0,025 mm dicke Überzug ergibt Korrosionsschutzwerte von 1-1,5 mm. Nach 4 Wochen Badalterung bei 35 °C werden nochmals Überzüge abgeschieden. Diese zeigen gegenüber den aus frischem Bad abgeschiedenen Überzügen keinen Qualitätsverlust.

Vergleichsbeispiel a

Es wird wie bei Beispiel 1 verfahren, lediglich der Stabilisator A wird durch die gleiche Menge an Harz A ersetzt. Die aus dem frisch angesetzten Bad abgeschiedenen Überzüge sind glatt und ergeben den gleichen Korrosionsschutz wie die nach Beispiel 1 erhaltenen Überzüge. Nach einer Badalterung von 1 Woche werden neue Beschichtungen durchgeführt. Diese sind rauh und ergeben im Salzsprühtest bereits nach 120 h Flächenrost.

Vergleichsbeispiel b

Aus 115 Teilen Harz A und 17 Teilen der Komponente B 2 der DE-B-1929593 (wärmereaktives Kondensationsprodukt aus Formaldehyd und einer Phenolcarbonsäure) wird zusammen mit den in Beispiel 1 verwendeten Pigmentmengen ein Pigmentpaste und daraus ein Elektrotauchbad mit 12 % Festgehalt und einem pH von 7,1 hergestellt. Die daraus in 0,025 mm Schichtstärke anodisch abgeschiedenen Überzüge auf unbehandeltem Stahlblech werden 25 Minuten bei 170 °C eingebrannt. Die Korrosionsschutzprüfung ergibt nur mäßig gute Werte von 3-7 mm nach 240 Stunden. Nach 4 Wochen Badalterung werden nochmals Überzüge abgeschieden. Diese sind glatt, doch ist die Korrosionsschutzwirkung auf 7-12 mm nach 24 Stunden Salzsprühbelastung zurückgegangen.

**Ansprüche**

1. Durch Zusatz von Basen wasserverdünnbare Überzugsmittel, die als Bindemittel Umsetzungsprodukte von Dienpolymerisaten mit Maleinsäureanhydrid, sowie gegebenenfalls weitere übliche Zusätze und Hilfsmittel enthalten, *dadurch gekennzeichnet,* daß sie zusätzlich 0,5 bis 30 Gewichtsprozent, bezogen auf das Bindemittel einer mindestens einfach olefinisch ungesättigten Alkenylphenolcarbonsäure enthalten.

2. Überzugsmittel nach Anspruch 1, *dadurch gekennzeichnet,* daß die mindestens einfach olefinisch ungesättigte Alkenylphenolcarbonsäure ein Umsetzungsprodukt eines mindestens einfach olefinisch ungesättigten Alkenylphenols mit Maleinsäureanhydrid ist.

3. Überzugsmittel nach Anspruch 1, *dadurch gekennzeichnet,* daß die mindestens einfach olefinisch ungesättigte Alkenylphenolcarbonsäure ein Umsetzungsprodukt eines mindestens einfach olefinisch ungesättigten Alkenylphenols mit mindestens einer ungesättigten Fettsäure ist.

4. Überzugsmittel nach Anspruch 2 oder 3, *dadurch gekennzeichnet,* daß als mindestens einfach olefinisch ungesättigtes Alkenylphenol rohes oder destilliertes Cashew-Nußschalenöl verwendet wird.

5. Überzugsmittel nach einem der vorhergehenden Ansprüche, *dadurch gekennzeichnet,* daß sie 3 bis 15 Gewichtsprozent einer mindestens einfach olefinisch ungesättigten Alkenylphenolcarbonsäure enthalten.

6. Verwendung des Überzugsmittels nach einem der vorhergehenden Ansprüche für die Elektrotauchlackierung.

**Claims**

1. Coating materials which are water-dilutable by the addition of a base and which contain reaction products of diene polymers with maleic anhydride as binders and optionally further conventional additives and auxiliaries, *characterized in that* they additionally contain from 0.5 to 30 % by weight, based on the binder, of an at least monoolefinically unsaturated alkenylphenolcarboxylic acid.

2. Coating materials as claimed in claim 1, *characterized in that* the at least monoolefinically unsaturated alkenylphenolcarboxylic acid is a reaction product of an at least monoolefinically unsaturated alkenylphenol with maleic anhydride.

3. Coating materials as claimed in claim 1, *characterized in that* the at least monoolefinically unsaturated alkenylphenolcarboxylic acid is a reaction product of an at least monoolefinically unsaturated alkenylphenol with at least one unsaturated fatty acid.

4. Coating materials as claimed in claim 2 or 3, *characterized in that* crude or distilled cashew nutshell oil is used as the at least monoolefinically unsaturated alkenylphenol.

5. Coating materials as claimed in any of the preceding claims, *characterized in that* they contain from 3 to 15 % by weight of an at least monoolefinically unsaturated alkenylphenolcarboxylic acid.

6. Use of the coating materials as claimed in any of the preceding claims for immersion electrocoating.

**Revendications**

1. Matière de revêtement diluable à l'eau par addition de bases, contenant, comme liants, des produits de réaction de polymérisats diéniques avec l'anhydride maléique, ainsi que, le cas échéant, d'autres adjuvants et produits auxiliaires, caractérisée par le fait qu'elle renferme additionnellement 0,5 à 30 % en poids, rapportés au liant, d'un acide alkénylphénolcarboxylique comportant au moins une insaturation oléfinique.

2. Matière de revêtement selon la revendication 1, dans laquelle l'acide alkénylphénolcarboxylique comportant au moins une insaturation oléfinique est un produit de réaction d'un alkénylphénol comportant au moins une insaturation oléfinique avec l'anhydride maléique.

3. Matière de revêtement selon la revendication 1, dans laquelle l'acide alkénylphénolcarboxylique comportant au moins une insaturation oléfinique est un produit de réaction d'un alkénylphénol comportant au moins une insaturation oléfinique avec au moins un acide gras insaturé.

4. Matière de revêtement selon l'une des revendications 2 et 3, dans laquelle on utilise, comme alkénylphénol comportant au moins une insaturation oléfinique, de l'huile brute ou distillée d'écorces de noix de cajou.

5. Matière de revêtement selon l'une des revendications précédentes, qui renferme 3 à 15 % en poids d'un acide alkénylphénolcarboxylique comportant au moins une insaturation oléfinique.

6. Utilisation de la matière de revêtement selon l'une des revendications précédentes pour la peinture par électrodéposition.